# EUROPEAN PATENT APPLICATION

(11) **EP 2 626 239 A1**
(43) Date of publication of application: **14.08.2013**
(21) Application number: 12155013.1
(22) Date of filing: 10.02.2012
(51) Int. Cl.: B60N 2/66, B60N 2/56, A47C 7/46, A47C 7/74

(54) **Lumbar support device for a ventilated seat**

(71) Applicant: Schukra Gerätebau GmbH, 2560 Berndorf (AT)
(72) Inventor: Deppe, Rüdiger Heinrich, 85101 Lenting (DE); Martin, Wilfried, 90459 Nürnberg (DE); Kartchemnaia, Tamara, 90461 Nürnberg (DE); Junker, Klaus, 86911 Dießen a. Ammersee (DE); Maierhofer, Gunter, 90587 Veitsbronn (DE)
(74) Representative: Meier, Florian

(57) **Abstract**

A lumbar support device for a ventilated seat comprises a lumbar support member (2), a pair of guide members (4, 5), an adjusting member (14) and a ventilator (20). The adjusting member is coupled to the pair of guide members (4, 5) and is displaceable along the pair of guide members (4, 5) and configured such that the lumbar support member (2) is adjusted when the adjusting member (14) is displaced. The ventilator (20) is configured to provide seat ventilation. A mount structure (24, 25) mounts the ventilator (20) to the lumbar support member (2).

## Description

### FIELD OF THE INVENTION

The invention relates to a lumbar support device. The invention relates in particular to an adjustable lumbar support device which may be used for adjustments in a ventilated seat.

### BACKGROUND

Lumbar support devices are frequently provided in seat backrests in order to provide adequate support in the lumbar vertebral or lordosis region of a person sitting on the seat by forming a suitable support surface. The lumbar support device frequently has a support basket or other lumbar support member that is attached to a frame arranged in the seat backrest. By means of an adjusting device the curvature or convexity of the support basket or other lumbar support member may be adjusted. Alternatively or additionally, the position of the support basket or other lumbar support member along the longitudinal, i.e. height, direction of the backrest may be adjusted. An adjustment of the lumbar support member may be effected by means of a manual actuator or by means of a power actuator, which may comprise an electric motor. Lumbar support devices may also be implemented as four-way lumbar supports that allow both a curvature and a position of the lumbar support member to be adjusted, in order to provide for enhanced comfort. Examples for adjusting devices that provide excellent support to the person sitting on the seat are, for example, known from WO 2005/077705 A1 or from DE 10 2005 027 922 B3.

In order to provide enhanced convenience to the user, ventilation componentry may be integrated into a seat. Such ventilation componentry may include a ventilator. This allows climate functions to be integrated into the seat.

The combination of seat ventilation and adjustable lumbar support functions represents a considerable challenge. In one approach, the ventilator or other heating/cooling componentry may be provided at a location which is offset from the lumbar support region of the seat. While such an arrangement may prevent the ventilator from interfering with the adjustable lumbar support device, it may provide inadequate ventilation functions in the lumbar support region. If the ventilator is provided in proximity to the lumbar support region, good ventilation may be attained also in the lumbar support region. However, the ventilator may limit the adjustments which can be made with the adjustable lumbar support device.

In one approach which combines seat ventilation and adjustable lumbar support functions, an opening may be provided in a lumbar support basket. The ventilator may be mounted to the seating cushion so as to be displaceable in a direction normal to the backrest surface, without interfering with or physically contacting the lumbar support basket. Such an approach may have shortcomings in terms of construction space requirements.

### SUMMARY

There is a continued need in the art for an improved lumbar support device which addresses some of the above shortcomings. In particular, there is a need in the art for an adjustable lumbar support device which can be easily combined with ventilation functions of the seat. There is also a need in the art for such a lumbar support device which allows seat ventilation and adjustable lumbar support functions to be combined in a small construction space.

According to embodiments of the invention, a lumbar support device as defined in the independent claim is provided. The dependent claims define preferred or advantageous embodiments.

A lumbar support device for a ventilated seat according to an embodiment comprises a lumbar support member, a pair of guide members, an adjusting member coupled to the pair of guide members, a ventilator configured to provide seat ventilation and a mount structure which mounts the ventilator to the lumbar support member. The adjusting member is displaceable along the pair of guide members and configured such that the lumbar support member is adjusted when the adjusting member is displaced. The mount structure is coupled to the ventilator and the lumbar support member.

In the lumbar support device, the ventilator is mounted to the adjustable lumbar support member. By integrating the ventilator with the adjustable lumbar support device, a compact construction is attained.

The lumbar support member may be a lumbar support basket.

The ventilator may be mounted such that it is located at the side of the lumbar support member which faces away from the seat cushion. The lumbar support member may have an opening for allowing a fluid channel to extend therethrough.

The lumbar support device may comprise at least one coupling member coupled to the adjusting member. The at least one coupling member may be supported by at least one support section of the adjusting member. The at least one support section may be configured to be moved past the ventilator in a direction parallel to the pair of guide members when the adjusting member is displaced along the pair of guide members. This allows the ventilator to be provided in a lower seat portion. With the at least one support section being configured to move past the ventilator, the ventilator does not interfere with the operation of lumbar support adjustment.

The at least one coupling member may be an arching member.

The at least one support section may support an end of the at least one coupling member.

The adjusting member may include a cross member extending between the pair of guide members. A cut-out may be formed in the cross member to allow the ventilator to pass therethrough when the adjusting member is displaced along the pair of guide members.

The cut-out may be dimensioned to define a clearance between the cross member and the ventilator, in a direction normal to a plane defined by the pair of guide members.

The adjusting member may include a pair of legs extending along the pair of guide members. The pair of legs may be spaced by a distance which is greater than a lateral dimension of the ventilator. The at least one support section may be formed on the pair of legs.

The lumbar support device may comprise a stop to limit movement of the ventilator when a load is applied onto the lumbar support member.

The lumbar support device may comprise a connection member to connect the ventilator to a fluid channel of the ventilated seat. The connection member may comprise a resilient bellows. The connection member may have one end coupled to the ventilator, and another end coupled to a fluid channel of a seat cushion. The resilient bellows may be formed from an air-tight material.

The mount structure may be formed from a plastic material. The mount structure may comprise a rubber mount or a plurality of rubber mounts.

The ventilator may be a sucking ventilator.

The lumbar support structure may comprise a further adjusting member which is displaceable along the pair of guide members, and a power drive mechanism to displace at least one of the adjusting member and the further adjusting member along the pair of guide members.

The power drive mechanism may comprise a motor and a spindle operatively coupled to the motor. The spindle may be arranged to extend parallel to the pair of guide members. This allows the lumbar support device for the ventilated seat to have a particularly compact configuration.

One of the adjusting member and the further adjusting member may be displaceably supported on the other one of the adjusting member and the further adjusting member.

According to another embodiment, a ventilated seat is provided. The ventilated seat has a seat cushion and the lumbar support device of any one aspect or embodiment.

The ventilator may be connected to at least one fluid channel formed in the seat cushion.

The devices according to various embodiments may be utilized for adjusting a lumbar support in a seat backrest of a ventilated seat. The devices according to the various embodiments may be utilized for adjusting a lumbar support provided in a seat backrest of a vehicle seat and for providing ventilation to the vehicle seat, in particular an automotive vehicle seat.

### BRIEF DESCRIPTION OF THE DRAWINGS

Additional features and advantages of the invention will become more readily appreciated from the following detailed description of preferred or advantageous embodiments with reference to the accompanying drawings, wherein:
Fig. 1 is a perspective view of a lumbar support device according to an embodiment.
Fig. 2 is a partially broken-away side view of a lumbar support device according to an embodiment.
Fig. 3 is a plan view of the lumbar support device of Fig. 2.
Fig. 4 is a cross-sectional view along line IV-IV in Fig. 3.
Figs. 5-8 illustrate operation of the lumbar support device of Fig. 2.
Fig. 9 illustrates mounting of a ventilator in the lumbar support device of Fig. 2.
Fig. 11 is a plan view of a lumbar support device according to another embodiment.
Figs. 12 and 13 are partially broken-away side views of a lumbar support device according to another embodiment.
Fig. 14 is a partially broken-away side view of a lumbar support device according to another embodiment.
Fig. 15 is a plan view of a lumbar support device according to another embodiment.
Fig. 16 is a plan view of a lumbar support device according to another embodiment.
Fig. 17 is a plan view of a lumbar support device according to another embodiment.
Fig. 18 is a plan view of a lumbar support device according to another embodiment.
Fig. 19 is a plan view of a lumbar support device according to another embodiment.

### DETAILED DESCRIPTION OF EMBODIMENTS

Exemplary embodiments of the invention will be described with reference to the drawings. While some embodiments will be described in the context of specific fields of application, such as in the context of automotive vehicle seating, the embodiments are not limited to this field of application. The features of the various embodiments may be combined with each other unless specifically noted otherwise.

In the drawings, elements or features which have the same or similar construction and/or operation are designated with the same reference numerals.

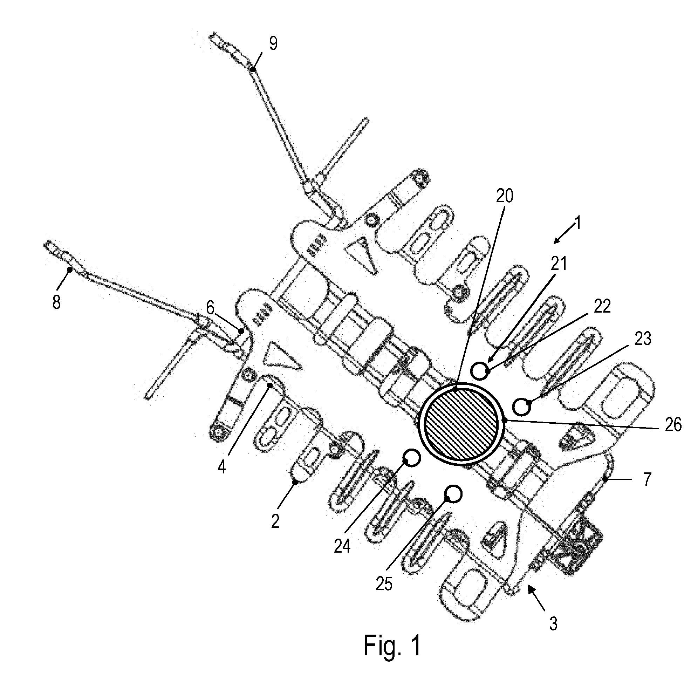

Fig. 1 is a perspective view of a lumbar support device 1 according to an embodiment. The lumbar support device 1 comprises a lumbar support member 2 and an adjusting device 3 for adjusting the lumbar support member 2. The lumbar support member 2 may be configured as a so-called support basket having a plurality of resilient fingers for providing support. Other suitable configurations of lumbar support members, such as support plates or similar, may also be used to implement the lumbar support member 2.

When the lumbar support device 1 is installed in a backrest of a seat, the adjusting device 3 is operative to alter the position of an apex of the lumbar support member 2. The adjusting device 3 may be configured to adjust a position and/or height of the apex. To this end, the adjusting device 3 may comprises a pair of adjusting members and at least one drive mechanism, as will be described in more detail in the following. The pair of adjusting members may be displaced along a pair of guide members which extend substantially parallel and in a substantially longitudinal direction of the backrest.

The adjusting device 3 has a frame which comprises at least two guide members 4 and 5. Two cross members 6 and 7 extend in between the two guide members 4 and 5, so that the two guide members 4 and 5 are spaced relative to each other and extend essentially parallel to each other. The guide members 4 and 5 may be formed as guide wires. Extensions 8 and 9 of the frame defined by guide members 4 and 5 and the cross members 6 and 7, and extensions projecting from the cross member 6 in a width direction of the seat allow the frame defined by the guide members 4 and 5 and the cross members 6 and 7 to be mounted to the frame of a seat backrest. Several of the guide members 4, 5 and the cross members 6, 7 may be integrally formed. For illustration, the two guide members 4 and 5 and the lower cross member 7 may be formed from a wire which generally has a U-shape. Alternatively, the guide members 4, 5 and the cross members 6, 7 may be separate members that are attached to each other using suitable mounts.

The lumbar support device 1 has a ventilator 20 for providing seat ventilation. The ventilator 20 is mounted to the lumbar support member 2. The ventilator 20 may be located at a first side of the lumbar support member 2, the first side being located opposite to the face of the lumbar support member 2 which contacts a seat cushion or other upholstery. The ventilator 20 may be attached to the lumbar support member 2 via a mount structure 21. The mount structure 21 may include a plurality of rubber mounts 22-25, which are respectively attached to the ventilator 20 and the lumbar support structure 2. An opening 26 may be formed in the ventilator 20. The opening 26 may have a diameter which is smaller than a diameter of the ventilator 20. A connection member for providing fluid communication between the ventilator 20 and fluid channels of the seat cushion may extend through the opening 26. The ventilator 20 may be a sucking ventilator, which draws air into the ventilator 20. The ventilator 20 may suction air from fluid channels in the seat cushion towards the ventilator 20.

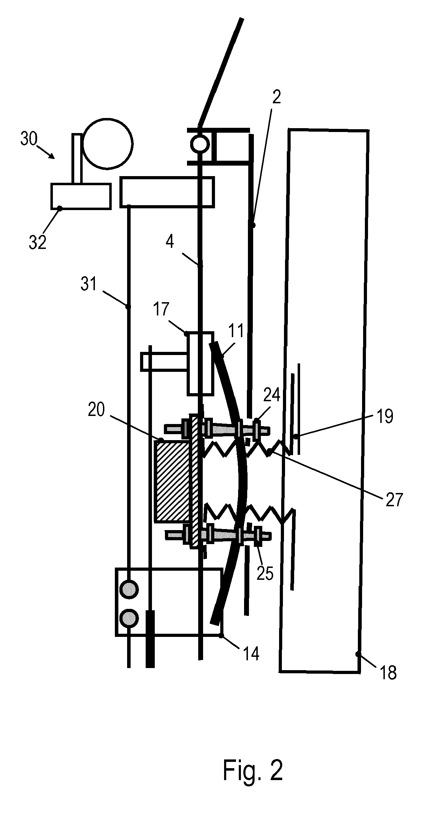

With reference to Figs. 2-19, lumbar support devices of embodiments which provide adjustable lumbar support and seat ventilation will be described in more detail.

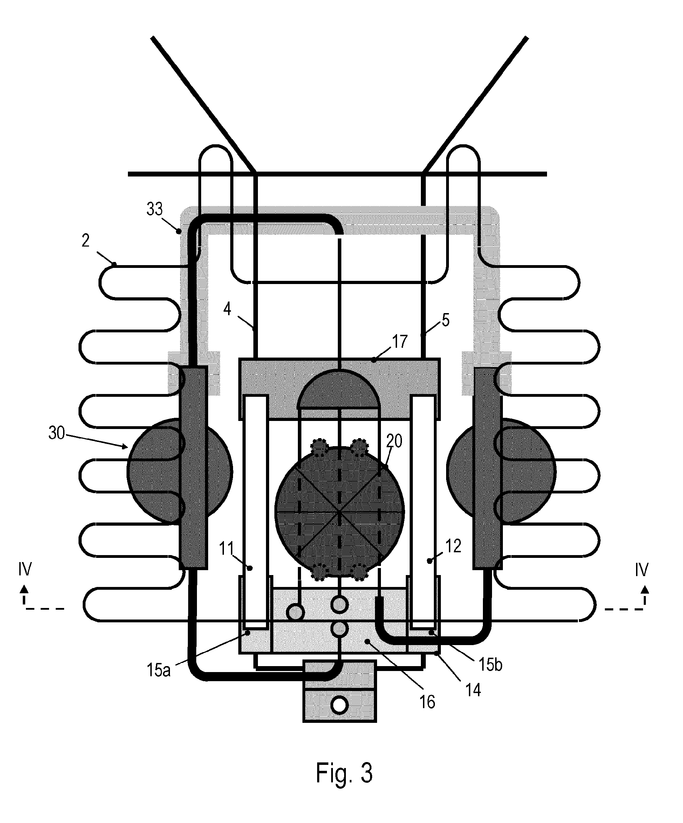

Referring now to Fig. 2 and Fig. 3, the lumbar support member 2 may be arranged to provide support for a seat cushion 18 when installed in a seat. The ventilator 20 is connected to a fluid channel 19 via a connection member 27. The connection member 27 may be formed as a resilient bellows. The connection member 27 may be formed from an airtight material. The ventilator 20 is attached to the lumbar support member 2, such that it is located at a rear side, i.e. the side facing away from the seat cushion 18. Rubber mounts 24, 25 hold the ventilator 20 attached to the lumbar support member 2. The ventilator 20 is mounted such that it is spaced from the lumbar support member 2.

In order to provide adjustable lumbar support, the lumbar support device includes an adjusting member 14 and a further adjusting member 17. The adjusting member 14 is displaceable along the guide members 4, 5. The further adjusting member 17 is displaceable along the guide members 4, 5. At least one drive mechanism is provided to displace one or both of the adjusting member 14 and the further adjusting member 17 along the guide member 4, 5. A pair of coupling members 11, 12 (only one of which is shown in Fig. 2) is coupled to the adjusting member 14 and the further adjusting member 17. The coupling members 11, 12 push against the lumbar support member 2 at the rear side thereof. By jointly displacing the adjusting member 14 and the further adjusting member 17 along the guide members 4, 5, the location of an apex may be adjusted along the longitudinal direction of the backrest. By displacing the adjusting member 14 and the further adjusting member 17 relative to each other, a curvature of the coupling members 11, 12 may be adjusted, thereby altering the height of the apex measured normal to the backrest.

Any one of a variety of drive mechanisms may be used to displace the coupling members 11, 12. In one implementation, a Bowden cable arrangement may be used, as schematically illustrated at 30. The Bowden cable arrangement 30 may include at least one motor 32 coupled to Bowden cables 31. At least two Bowden cables may be used to effect a joint and relative displacement of the adjusting member 14 and the further adjusting member 17.

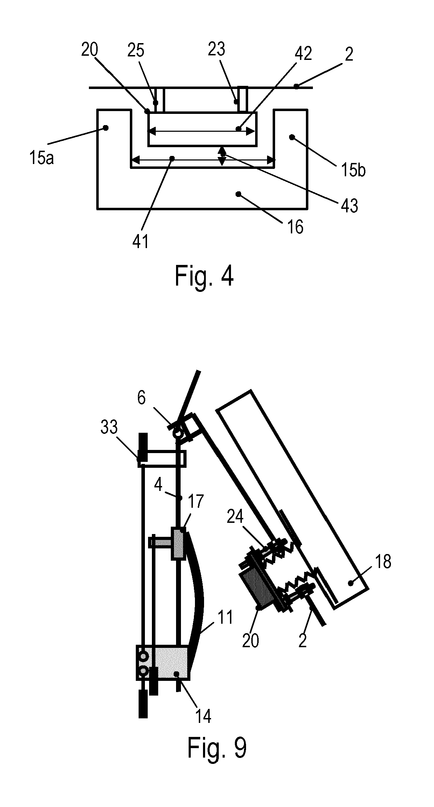

As will be described in more detail with reference to Figs. 4-8, the adjusting member 14 has a configuration which allows the adjusting member 14 to be moved past the ventilator 20, when the adjusting member 14 is displaced in an upward direction in Fig. 2. To this end, the adjusting member 14 may have a cut-out through which the ventilator 20 may pass when the adjusting member 14 is displaced along the guide members 4, 5. In other words, the adjusting member 14 may have lateral portions between which the ventilator 20 is received while the adjusting member 14 is displaced along the guide members 4, 5 and past the ventilator 20.

Fig. 3 is a plan view of the lumbar support device of Fig. 2. As illustrated, a plurality of Bowden cables may be attached to the adjusting member 14 and the further adjusting member 17. By selectively drawing in or playing out one of the Bowden cable wires, a joint displacement of the adjusting member 14 and the further adjusting member 17 is brought about. By selectively drawing in or playing out another one of the Bowden cable wires, a relative displacement between the adjusting member 14 and the further adjusting member 17 is brought about. The Bowden cable arrangement may be guided along a portion of a seat frame 33. Pulleys, motors, and gears of the drive mechanism may also be supported on the seat frame 33. Where the Bowden cable wires extend between the adjusting member 14 and the further adjusting member 17, they are positioned to extend offset from the ventilator, preferably in a plane which is located further away from the lumbar support member 2 than the ventilator 20.

The adjusting member 14 has lateral support sections 15a, 15b and a cross member 16. The cross member 16 extends between the guide members 4, 5. The later support section 15a supports a lower end of the coupling member 11. The lateral support section 15b supports a lower end of the other coupling member 12. The coupling members 11 and 12 may be resilient and configured such that their curvature is altered as the adjusting member 14 and further adjusting member 17 are displaced relative to each other.

The cross member 16 of the adjusting member 14 is recessed compared to the lateral support sections 15a, 15b. The adjusting member 14 defines a cut-out which allows the ventilator 20 to pass therethrough as the adjusting member 14 is displaced along the guide member 4, 5.

Fig. 4 shows a cross-sectional view of the lumbar support device of Fig. 3 along line IV-IV in Fig. 3. The cross member 16 of the adjusting member 14 is recessed compared to the lateral support sections 15a, 15b. This allows the ventilator 20 to enter a recess formed between the lateral support sections 15a, 15b. A distance 41 between the two lateral support sections 15a, 15b, measured in a direction perpendicular to the two guide members 4, 5, is greater than a maximum lateral width 42 of the ventilator 20, measured in the direction perpendicular to the two guide members 4, 5.

The cross member 16 of the adjusting member 14 is recessed by a distance that is set such that a clearance exists between the ventilator 20 and the cross member 16 when the adjusting member 14 is moved past the ventilator 20. The clearance has a height 43. The height 43 may be set so as to allow the lumbar support member 2 and the ventilator 20 attached thereto to be displaced in a direction normal to the backrest, when a seat occupant exerts a load onto the backrest.

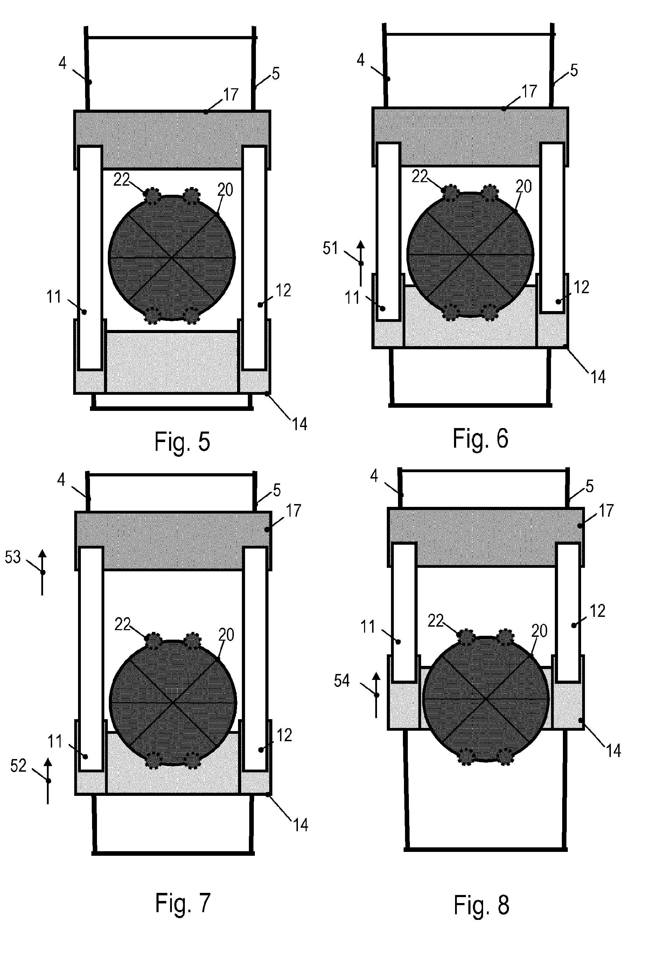

Figs. 5-8 illustrate operation of the lumbar support device of Figs. 2-4. Fig. 5 shows a state in which the adjusting member 14 and the further adjusting member are spaced by a large distance. Accordingly, the curvature of the coupling members 11, 12 is small.

Fig. 6 shows a state in which the adjusting member 14 is displaced toward the further adjusting member 17, causing the adjusting member 14 to move in a direction 51. The adjusting member 14 has a configuration which allows it to move past the ventilator 20 in this process. The ventilator 20 does not interfere with the movement of the adjusting member 14, even when a load is exerted onto the backrest. When the adjusting member 14 is displaced toward the further adjusting member 17, the curvature of the coupling members 11, 12 increases. This increases the height of the apex of the lumbar support, measured normal to the backrest surface.

Fig. 7 shows a state in which the adjusting member 14 and the further adjusting member 17 are jointly displaced, causing them to move in a direction 52 and 53, respectively. The adjusting member 14 has a configuration which allows it to move past the ventilator 20 in this process. The ventilator 20 does not interfere with the movement of the adjusting member 14, even when a load is exerted onto the backrest. When the adjusting member 14 and the further adjusting member 17 are jointly displaced, the coupling members 11, 12 are displaced while their curvature is not altered. The apex of the lumbar support is thereby moved along the longitudinal direction of the backrest.

Fig. 8 shows a state in which, subsequently, the adjusting member 14 is displaced toward the further adjusting member 17, causing the adjusting member 14 to move in a direction 54. The adjusting member 14 has a configuration which allows it to move past the ventilator 20 in this process. The ventilator 20 does not interfere with the movement of the adjusting member 14, even when a load is exerted onto the backrest. When the adjusting member 14 is displaced toward the further adjusting member 17, the curvature of the coupling members 11, 12 increases. This increases the height of the apex of the lumbar support, measured normal to the backrest surface.

It will be appreciated that the adjusting member 14 may be displaced along the guide member 4, 5, and the ventilator 20 mounted to the lumbar support member 2 does not interfere with this displacement. The construction of the lumbar support device allows the ventilator 20 to be arranged at a lower portion of the backrest. This allows the ventilator 20 to be positioned close to where most of the ventilation is actually required. Ventilation may thereby be improved.

Fig. 9 illustrates a process of mounting the ventilator 20 to the lumbar support member 2. The lumbar support member 2 may be rotated about the cross member 6 of the wire frame. The rubber mounts 24 may be snapped onto the lumbar support member 2. Thereby, the ventilator 20 may be mounted to the lumbar support member 2. The connection member 27 for providing fluid communication between the seat cushion 18 and the ventilator 20 may be connected to the ventilator 20 and the seat cushion 18. By rotating the lumbar support member 2 back around the cross member 6 of the wire frame, the ventilator 20 may be brought to its operative position. The ventilator 20 may be mounted to the seat also after assembly of the other components of the lumbar support device has been completed, by rotating the lumbar support member 2. In another mounting method, the ventilator 20 and the lumbar support member 2 may be mounted separately. In yet another mounting method, the ventilator 20 may be mounted to the lumbar support after assembly of the other components. In this case, rather than rotating, the lumbar support member 2, the adjusting member 14 and further adjusting member 17 may be brought into positions which define a clearance that allows the ventilator 20 to be mounted to the lumbar support member 2, e.g. from the rear side thereof.

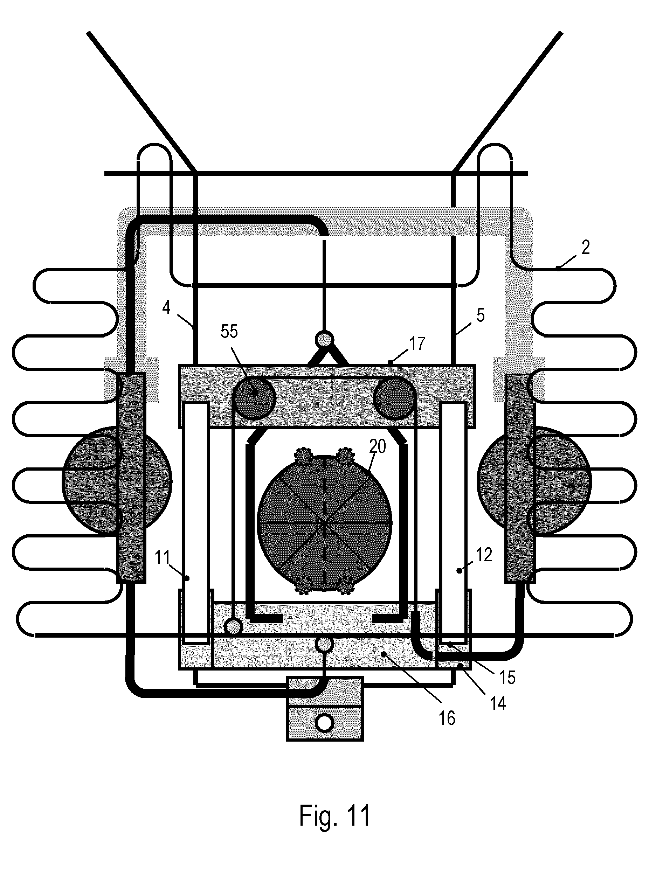

Fig. 11 is a plan view of a lumbar support device of another embodiment. In the lumbar support device of Fig. 11, the Bowden cable wires are guided such that they do not extend across an area in which the ventilator 20 is to be mounted. Thereby, a central region of the lumbar support device is kept clear of Bowden cable sheaths and wires. This facilitates mounting of the ventilator 20 and/or may decrease the overall height of the lumbar support device. Guides 55 for Bowden cable sheaths and/or Bowden cable wires may be provided to appropriately guide the Bowden cable sheaths and/or Bowden cable wires.

The other configuration and operation of the lumbar support device of Fig. 11 corresponds to that explained with reference to Figs. 1-10.

In the lumbar support devices of any one embodiment, stops may be provided to limit movement of the lumbar support member 2 and the ventilator 20 attached thereto. The stops may be dimensioned such that they prevent the ventilator 20 from contacting the adjusting member 14 in excessive load conditions, even when the ventilator 20 is positioned in the cut-out of the adjusting member 14.

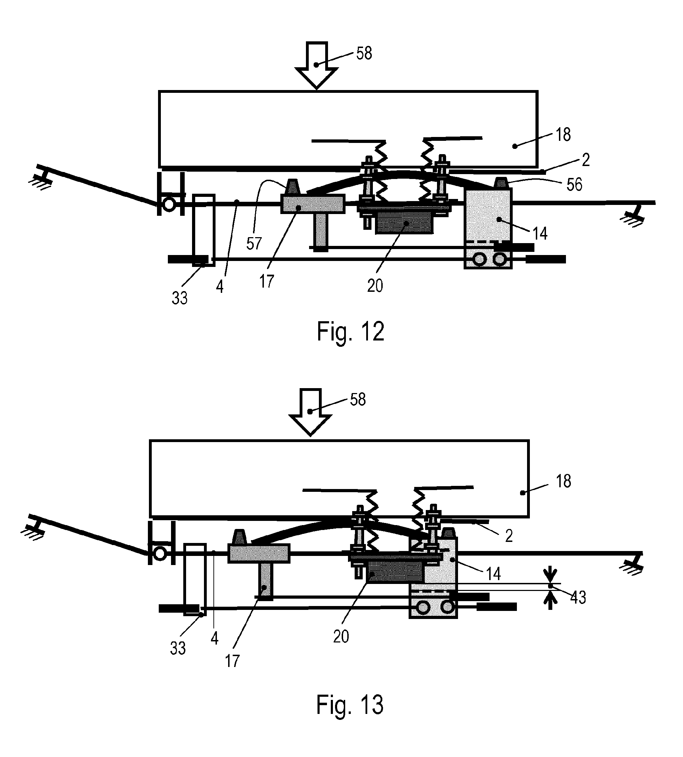

Fig. 12 shows a partially broken-away view of a lumbar support device of an embodiment. Fig. 13 shows a partially broken-away view of the lumbar support device when the adjusting member 14 has been displaced along the guide member 4. The lumbar support device has a ventilator 20 attached to a lumbar support member 2.

A stop 56 is formed on the adjusting member 14. The stop 56 projects from the adjusting member 14 towards the lumbar support member 2. A further stop 57 is formed on the further adjusting member 17. The further stop 57 projects from the further adjusting member 17 towards the lumbar support member 2. The stop 56 and the further stop 57 may be positioned and dimensioned such that the distance by which the lumbar support member 2 may be displaced under a load 58 is less than the height 43 of the clearance between cross member 16 of the adjusting member 14 and the ventilator 20.

The stop(s) may also be provided at the lumbar support member 2 rather than at the adjusting member 14 and the further adjusting member 17.

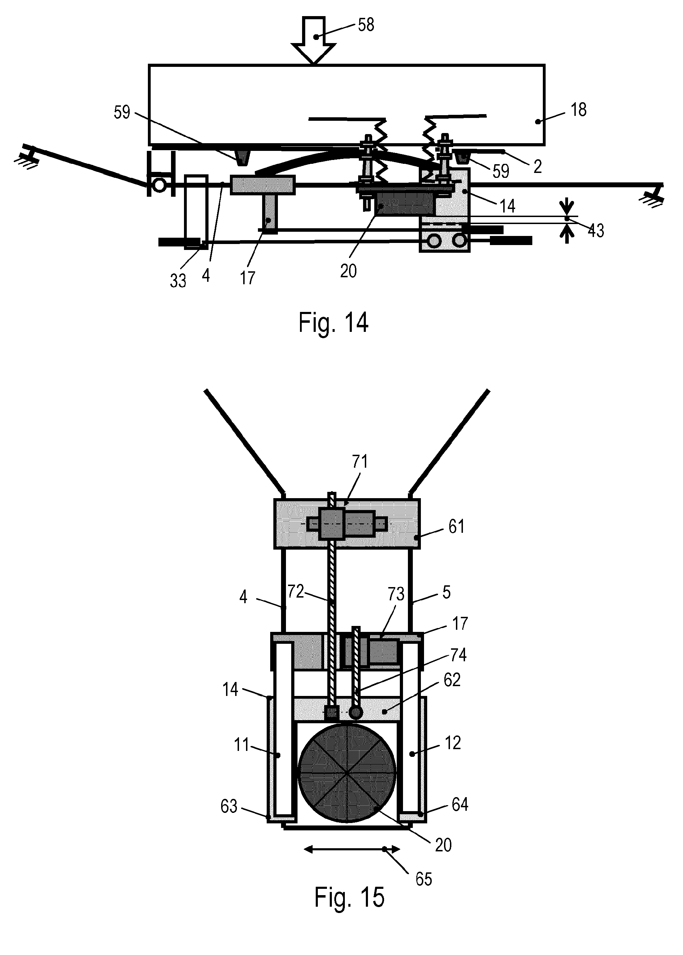

Fig. 14 shows a partially broken-away view of a lumbar support device of another embodiment. The lumbar support device has a ventilator 20 attached to a lumbar support member 2. Stops 59 are formed on the lumbar support member 2. The stops 59 project from the lumbar support member 2 towards the adjusting member 14 and the further adjusting member 17. The stops 59 may be positioned and dimensioned such that the distance by which the lumbar support member 2 may be displaced under a load 58 is less than the height 43 of the clearance between cross member 16 of the adjusting member 14 and the ventilator 20. The position of the stops 59 may be selected such that the stops 59 selectively stop movement of the lumbar support member 2 when the ventilator 20 is at least partially received in the cut-out between the lateral support sections 15a, 15b of the adjusting member 14.

In yet another embodiment, at least one stop may be provided on the adjusting member 14 and/or the further adjusting member 17, and at least one other stop may be provided on the lumbar support member 2.

Other configurations for adjusting mechanisms may be utilized in other embodiments. For illustration, spindle drive mechanism(s) may be used instead of Bowden cable drive mechanisms. Each spindle drive mechanism may have a spindle which has a structured exterior surface. The spindle may be flexible. At least one motor of a spindle drive mechanism may be arranged on an adjusting member which is displaceable along a pair of guide members 4, 5.

For further illustration, at least one of the adjusting members may have a U-shaped configuration with legs of the U-shaped adjusting member extending parallel to and along the guide members 4, 5. The legs of the U-shaped adjusting member may receive the ventilator 20 therebetween. Support sections of the U-shaped adjusting member, which support ends of arching members or other coupling members that act upon the lumbar support member 2, may be spaced by a distance which allows them to be moved past the ventilator when the adjusting member is displaced along the guide members 4, 5.

Lumbar support devices which utilize such a U-shaped adjusting member will be described with reference to Figs. 15-19. While not shown in Figs. 15-19, it is to be understood that the lumbar support devices explained with reference to Figs. 15-19 also have a lumbar support member 2, such as a lumbar support basket, and a mount structure which mounts the ventilator 20 to the lumbar support member 2. In the installed state of the lumbar support device, the ventilator 20 is in fluid communication with at least one air channel which may be formed in a seat cushion. The ventilator 20 may be a sucking ventilator.

Fig. 15 shows a lumbar support device. The lumbar support device has an adjusting member 14 and a further adjusting member 17. The adjusting member 14 and the further adjusting member 17 are displaceable along a pair of spaced guide member 4,5.

The lumbar support device has two spindle drive mechanisms. A first spindle drive mechanism 71 includes a motor operatively coupled to a spindle 72. Actuation of the first spindle drive mechanism 71 causes the first adjusting member 14 and the second adjusting member 17 to be jointly displaced along the guide members 4, 5. The spindle 72 may have an end coupled to the adjusting member 14. A spindle nut may be provided on a support bar 61 which supports a motor of the first spindle drive mechanism 71. The spindle 72 of the first spindle drive mechanism may extend through or past the further adjusting member 17 but does not interact therewith.

A second spindle drive mechanism 73 includes a motor operatively coupled to a spindle 74. Actuation of the second spindle drive mechanism 73 causes the second adjusting member 14 and the second adjusting member 17 to be displaced relative to each other along the guide members 4, 5. The spindle 74 may have an end coupled to the adjusting member 14. A spindle nut may be provided on the further adjusting member 17. A motor of the second spindle drive mechanism 73 may also be supported in the further adjusting member 17.

The adjusting member 14 has a U-shape, when seen in plan view. The adjusting member 14 has a cross member 62 which extends between the pair of guide members 4, 5 in a direction normal thereto. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member.

In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

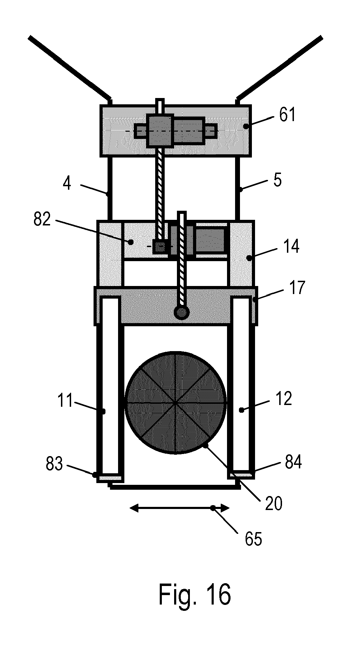

Fig. 16 shows a lumbar support device. The lumbar support device has an adjusting member 14 and a further adjusting member 17. The adjusting member 14 and the further adjusting member 17 are displaceable along a pair of spaced guide member 4,5.

The lumbar support device has two spindle drive mechanisms, operative as explained with reference to Fig. 15.

The adjusting member 14 has a U-shape, when seen in plan view. The adjusting member 14 has a cross member 82 which extends between the pair of guide members 4, 5 in a direction normal to the guide members 4, 5. The adjusting member 14 has a first leg 83 and a second leg 84. The first leg 83 extends parallel to the guide member 4. The second leg 84 extends parallel to the guide member 5. An end of the first leg 83 supports an end of the coupling member 11. The coupling member 11 may be an arching member. An end of the second leg 84 supports an end of the coupling member 12. The coupling member 12 may also be an arching member.

In at least one operative position of the adjusting member 14, the first leg 83 and the second leg 84 are arranged so as to be laterally offset from the ventilator 20. The ventilator 20 is received in the gap formed between the first leg 83 and the second leg 84. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

The further adjusting member 17 is slideably supported on the adjusting member 14. The legs 83, 84 of the adjusting member 14 and the further adjusting member 17 may be provided with a linear guide mechanism which allows the further adjusting member 17 to be slid along the legs 83, 84 of the adjusting member 14. I.e., the further adjusting member 17 is displaced along the legs 83, 84 of the adjusting member when the second spindle drive mechanism is actuated. The resultant change in distance between the further adjusting member 17 and the lower ends of the legs 83, 84 which support the coupling members 11, 12 changes the curvature of the coupling members 11, 12.

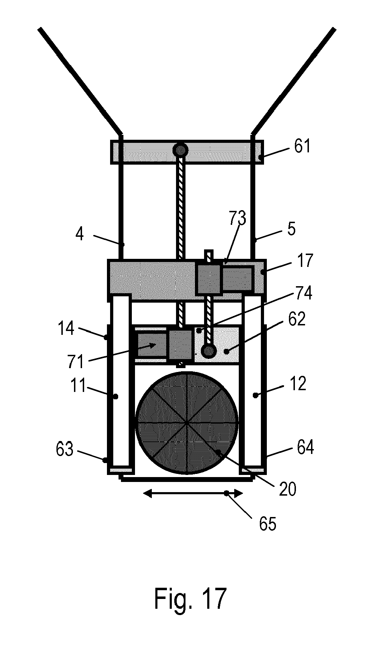

Fig. 17 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 15. In the lumbar support device of Fig. 17, a motor of the first spindle drive mechanism 71 is supported on the cross member 62 of the adjusting member 14. An end of the spindle of the first spindle drive mechanism is attached to the support bar 61.

As explained with reference to Fig. 15, the adjusting member 14 has a U-shape, when seen in plan view. The adjusting member 14 has the cross member 62 which extends between the pair of guide members 4, 5 in a direction normal thereto. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member. In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

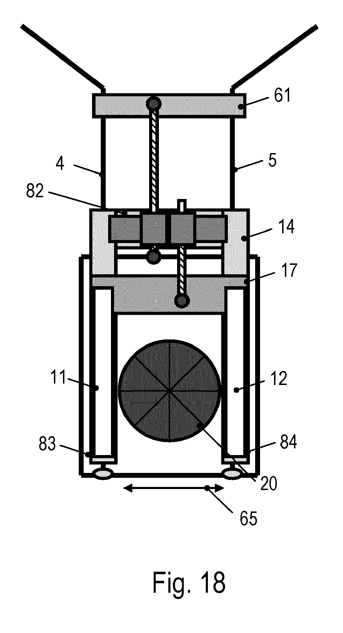

Fig. 18 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 15. In the lumbar support device of Fig. 17, a motor of the first spindle drive mechanism is supported on a cross member 82 of the adjusting member 14. A motor of the second spindle drive mechanism is also supported on the cross member 82 of the adjusting member 14.

The adjusting member 14 has a U-shape, when seen in plan view. The adjusting member 14 has a cross member 82 which extends between the pair of guide members 4, 5 in a direction normal to the guide members 4, 5. The adjusting member 14 has a first leg 83 and a second leg 84. The first leg 83 extends parallel to the guide member 4. The second leg 84 extends parallel to the guide member 5. An end of the first leg 83 supports an end of the coupling member 11. The coupling member 11 may be an arching member. An end of the second leg 84 supports an end of the coupling member 12. The coupling member 12 may also be an arching member.

In at least one operative position of the adjusting member 14, the first leg 83 and the second leg 84 are arranged so as to be laterally offset from the ventilator 20. The ventilator 20 is received in the gap formed between the first leg 83 and the second leg 84. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

The further adjusting member 17 is slideably supported on the adjusting member 14. The legs 83, 84 of the adjusting member 14 and the further adjusting member 17 may be provided with a linear guide mechanism which allows the further adjusting member 17 to be slid along the legs 83, 84 of the adjusting member 14. I.e., the further adjusting member 17 is displaced along the legs 83, 84 of the adjusting member when the second spindle drive mechanism is actuated. The resultant change in distance between the further adjusting member 17 and the lower ends of the legs 83, 84 which support the coupling members 11, 12 changes the curvature of the coupling members 11, 12.

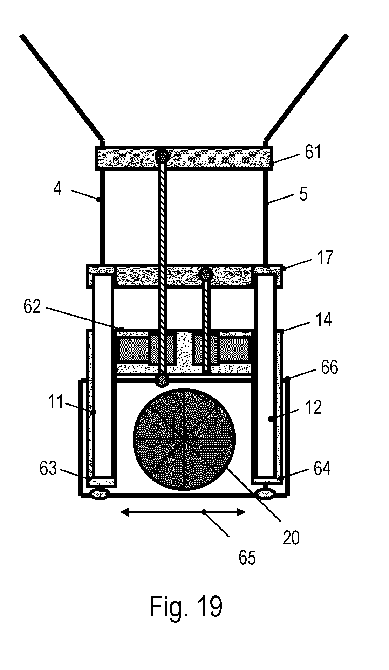

Fig. 19 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 15. In the lumbar support device of Fig. 17, a motor of the first spindle drive mechanism and a spindle nut operatively coupled to the motor is supported on a cross member 62 of the adjusting member 14. A motor of the second spindle drive mechanism is also supported on the cross member 62 of the adjusting member 14. Ends of a spindle of the first spindle drive mechanism are attached to the support bar 61 and a wire frame 66. A spindle nut of the first spindle drive mechanism is mounted on the first adjusting member 14. Actuation of a motor of the first spindle drive mechanism causes the adjusting member 14 and the further adjusting member 17 to be jointly displaced along the spindle of the first spindle drive mechanism. An end of a spindle of the second spindle drive mechanism is attached to the further adjusting member 17. A spindle nut of the second spindle drive mechanism is mounted on the first adjusting member 14. Actuation of a motor of the second spindle drive mechanism causes the adjusting member 14 and the further adjusting member 17 to be displaced relative to each other along the spindle of the second spindle drive mechanism.

The adjusting member 14 has a U-shape, when seen in plan view. The adjusting member 14 has the cross member 62 which extends between the pair of guide members 4, 5 in a direction normal to the guide members 4, 5. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member.

In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

The lumbar support devices of Figs. 15-19 can be realized with a particularly compact construction space. The use of the U-shaped adjusting member allows the ventilator 20 to be positioned at a lower region of the backrest.

In the lumbar support devices of Figs. 15-19, spindle drive mechanisms are used. A spindle of each spindle drive mechanism extends parallel to the pair of guide members 4, 5 in a state in which no load is applied onto the lumbar support member 2. The motor of at least one lumbar support member is provided on the adjusting member or the further adjusting member, so as to be displaced along the pair of guide members 4, 5 upon actuation.

While lumbar support devices of embodiments have been described with reference to the drawings, modifications and alterations may be implemented in still other embodiments.

For illustration, the rubber mount(s) used to mount the ventilator to the lumbar support member may be configured to snap the rubber mount(s) onto the lumbar support member for ease of installation. Additional spacer(s) may be used to further reduce noise. In some embodiments, the rubber mount(s) hold the ventilator such that the ventilator is spaced from all other rigid elements of the lumbar support device and vehicle seat under no-load and normal load conditions of the seat. Good noise reduction may be attained.

For illustration, while lumbar support devices operative to adjust both a height and a curvature of the lumbar support has been described, in other embodiments, the lumbar support device is not necessarily implemented as a four-way adjusting device. In an embodiment, the lumbar support device may comprise a moveable adjusting member and a drive mechanism, the lumbar support device being configured such that displacement of the adjusting member adjusts a height of the lumbar support along the longitudinal direction of the backrest. In an embodiment, the lumbar support device may comprise a moveable adjusting member and a drive mechanism, the lumbar support device being configured such that displacement of the adjusting member adjusts a curvature of the lumbar support. In either case, a shaft having a structured surface may be provided, which engages a transmission coupled between a motor and the shaft.

While a drive mechanism have been described which utilize Bowden cables or spindle mechanisms for converting a rotary output motion of a motor into a linear displacement of an adjusting member, other drive mechanisms may be used in order to effect a height adjustment of the lumbar support and/or a curvature adjustment of the lumbar support. For illustration, a drive mechanism that employs a shaft having a toothed surface may be utilized. Combinations of Bowden cables and spindle drives may be used in other embodiments.

While a lumbar support device having a lumbar support member formed as a support basket has been shown in the drawings, the lumbar support member may have other suitable configurations in other embodiments. For illustration, the lumbar support member may be a support plate.

While lumbar support devices having an arching member have been described, the coupling between the adjusting member and the lumbar support member may also effected in other ways. For illustration, coupling members which are pivotable may be used. Alternatively or additionally, coupling members which are displaced along a pre-determined path when the adjusting member is displaced may be used.

While exemplary embodiments have been described in the context of lumbar support adjustment and ventilation in the backrest of a vehicle seat, embodiments of the invention are not limited to this particular field of application. Rather, embodiments of the invention may be advantageously employed to adjust lumbar supports in a wide variety of ventilated seats.

## Claims

1. A lumbar support device for a ventilated seat, comprising:
a lumbar support member (2),
a pair of guide members (4, 5),
an adjusting member (14) coupled to the pair of guide members (4, 5), the adjusting member (14) being displaceable along the pair of guide members (4, 5) and configured such that the lumbar support member (2) is adjusted when the adjusting member (14) is displaced,
a ventilator (20) configured to provide seat ventilation, and
a mount structure (21-25) mounting the ventilator (20) to the lumbar support member (2), the mount structure (21-25) being coupled to the ventilator (20) and the lumbar support member (2).

2. The lumbar support device of claim 1, further comprising:
at least one coupling member (11, 12) coupled to the adjusting member (14), the at least one coupling member (11, 12) being supported by at least one support section (15a, 15b; 63, 64; 83, 84) of the adjusting member (14),
wherein the at least one support section (15a, 15b; 63, 64; 83, 84) is configured to be moved past the ventilator (20) in a direction parallel to the pair of guide members (4, 5) when the adjusting member (14) is displaced along the pair of guide members (4, 5).

3. The lumbar support device of claim 2,
wherein the at least one support section (15a, 15b; 63, 64; 83, 84) supports an end of the at least one coupling member (11, 12).

4. The lumbar support device of claim 2 or claim 3,
wherein the adjusting member (14) includes a cross member (16) extending between the pair of guide members (4, 5), and
wherein a cut-out is formed in the cross member (16) to allow the ventilator (20) to pass therethrough when the adjusting member (14) is displaced along the pair of guide members (4, 5).

5. The lumbar support device of claim 4,
wherein the cut-out is dimensioned to define a clearance (43) between the cross member (16) and the ventilator (20).

6. The lumbar support device of any one of claims 2-5,
wherein the adjusting member (14) includes a pair of legs (63, 64; 83, 84) extending along the pair of guide members (4, 5), the pair of legs (63, 64; 83, 84) being spaced by a distance (65) which is greater than a lateral dimension of the ventilator (20), the at least one support section being formed on the pair of legs (63, 64; 83, 84).

7. The lumbar support device of any one of the preceding claims, further comprising:
a stop (56, 57; 59) to limit movement of the ventilator (20) when a load (58) is applied onto the lumbar support member (2).

8. The lumbar support device of any one of the preceding claims, further comprising:
a connection member (27) to connect the ventilator (20) to a fluid channel (19) of the ventilated seat, the connection member (27) comprising a resilient bellows.

9. The lumbar support device of any one of the preceding claims,
wherein the mount structure (21-25) is formed from a plastic material, in particular from rubber.

10. The lumbar support device of any one of the preceding claims,
wherein the ventilator (20) is a sucking ventilator (20).

11. The lumbar support device of any one of the preceding claims, further comprising:
a further adjusting member (17) which is displaceable along the pair of guide members (4, 5), and
a power drive mechanism (31; 71, 72) configured to displace at least one of the adjusting member (14) and the further adjusting member (17) along the pair of guide members (4, 5).

12. The lumbar support device of claim 11,
wherein the power drive mechanism comprises a motor and a spindle (72, 74) operatively coupled to the motor, the spindle (72, 74) extending parallel to the pair of guide members (4, 5).

13. The lumbar support device of claim 11 or claim 12,
wherein one of the adjusting member (14) and the further adjusting member (17) is displaceably supported on the other one of the adjusting member (14) and the further adjusting member (17).

14. A ventilated seat, comprising:
a seat cushion (18), and
the lumbar support device of any one of the preceding claims.

15. The ventilated seat of claim 14,
wherein the ventilator (20) is connected to at least one fluid channel (19) formed in the seat cushion (18).
